(19) Europäisches Patentamt
European Patent Office
Office européen des brevets

(11) **EP 1 014 061 A1**

(12) **EUROPÄISCHE PATENTANMELDUNG**

(43) Veröffentlichungstag:
28.06.2000 Patentblatt 2000/26

(51) Int. Cl.$^7$: **G01K 7/42**, G01K 3/06

(21) Anmeldenummer: 99123816.3

(22) Anmeldetag: 01.12.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **21.12.1998 DE 19859149**

(71) Anmelder:
**RUHRGAS AKTIENGESELLSCHAFT
45138 Essen (DE)**

(72) Erfinder: **Kolpatzik, Stefan
44869 Bochum (DE)**

(74) Vertreter:
**Harlacher, Mechthild, Dipl.-Ing.
Abt. TATP,
Ruhrgas AG,
Huttropstrasse 60
45138 Essen (DE)**

(54) **Verfahren zur Bestimmung der über den Querschnitt einer Gasleitung gemittelten Gastemperatur**

(57) In die Gasleitung ragt ein radiales Schutzrohr hinein, auf dessen Boden ein Temperatursensor angeordnet ist. Der Temperatursensor erfaßt also die Temperatur am Boden des Schutzrohres. Unter Vorgabe einer gemittelten Gastemperatur wird diese mit der Wandtemperatur der Gasleitung, der mittleren Gasgeschwinigkeit, Angaben über die Geometrie des Schutzrohres und den Stoffdaten verknüpft, und zwar zur Berechnung einer Bodentemperatur des Schutzrohres. Stimmt diese mit der gemessenen Bodentemperatur überein, so entspricht der angenommene Mittelwert der Gastemperatur der tatsächlichen gemittelten Temperatur. Ist keine Übereinstimmung gegeben, wird die angenommene gemittelte Temperatur geändert. Der Verknüpfungsvorgang wird solange wiederholt, bis die gewünschte Übereinstimmung gegeben ist. Bei der Berechnung der Bodentemperatur wird das Schutzrohr in Zellen zerlegt, und es werden für jede Zelle die Wärmebilanzen von Zelle zu Zelle und zum Gas hin erstellt. Dies ermöglicht eine Kompensation wechselnder Wandtemperaturen.

Fig. 2

EP 1 014 061 A1

**Beschreibung**

Die vorliegende Erfindung betrifft ein Verfahren zur Bestimmung der über den Querschnitt einer Gasleitung gemittelten Gastemperatur.

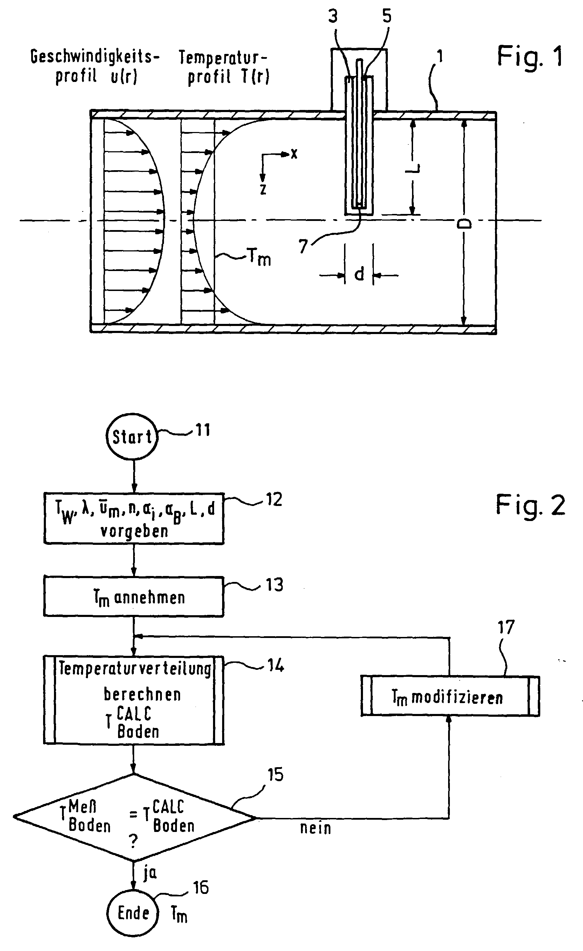

Mit Hilfe der gemittelten Gastemperatur läßt sich die Dichte des Gases und daraus bei Berücksichtigung des Volumenstromes der Massenstrom eines Gases berechnen. Eine bekannte Temperaturmeßstelle zur Bestimmung der über den Querschnitt einer Gasleitung gemittelten Gastemperatur ist in Figur 1 dargestellt.

Figur 1 zeigt eine Erdgasleitung 1, in welche radial ein Schutzrohr 3 aus Stahl eingeschraubt ist. Das Schutzrohr 3 weist einen mit Öl 5 gefüllten Mantel auf. Auf dem Boden des Schutzrohres 3 ist ein Temperatursensor 7, zum Beispiel ein Platin-Widerstandsthermometer, angeordnet. Mit Hilfe dieser Anordnung ist es möglich, den Temperatursensor auszubauen und zu überprüfen, ohne den Durchfluß in der Gasleitung stoppen zu müssen. Nachteilhaft an dieser Anordnung ist jedoch, daß die am Boden des Schutzrohres 3 gemessene Temperatur von der über den Querschnitt der Gasleitung gemittelten Temperatur abweicht. Der Grund hierfür ist, daß die Wandtemperatur der Gasleitung bedingt durch saisonale Schwankungen der Umgebungstemperatur unterschiedlich stark von der Gastemperatur abweicht. Dadurch existiert ein variierender Wärmestrom entlang des Schutzrohres, welcher die Temperaturmessung verfälscht. Folglich kann die mittlere Gastemperatur nicht mit der gewünschten Genauigkeit bestimmt werden.

Der Erfindung liegt daher die Aufgabe zugrunde, eine genauere Bestimmung der über den Querschnitt einer Gasleitung gemittelten Gastemperatur zu ermöglichen.

Diese Aufgabe wird erfindungsgemäß gelöst durch ein Verfahren zur Bestimmung der über den Querschnitt einer Gasleitung gemittelten Gastemperatur, wobei

a) die Temperatur am Boden eines in die Gasleitung hineinragenden Schutzrohres und die Wandtemperatur der Gasleitung gemessen werden,
b) die Länge und die Wärmeleitfähigkeit des Schutzrohres erfaßt werden,
c) die mittlere Geschwindigkeit des Gases erfaßt wird,
d) das Schutzrohr in axialer Richtung in wenigstens drei Zellen unterteilt wird, wobei der lokale Wärmeübergangskoeffizient zwischen Gas und Schutzrohr oder die dimensionslosen Kennzahlen die Reynoldszahl, Nußeltzahl, Prandtlzahl und Strouhalzahl für jede Zelle erfaßt wird bzw. werden, und
e) aus den erfaßten Meßsignalen die über den Querschnitt der Gasleitung gemittelte Gastemperatur abgeleitet wird.

Überraschenderweise hat sich gezeigt, daß bei Erfassung der genannten Meßgrößen zusätzlich zur Temperatur am Boden des Schutzrohres die mittlere Gastemperatur mit einer unerwartet hohen Genauigkeit von derzeit etwa 0,3 K bestimmt werden kann. Der technische und arbeitsmäßige Aufwand zur Erfassung der zusätzlichen Meßgrößen ist äußerst gering. Die Wandtemperatur der Gasleitung kann von außen einfach und zuverlässig gemessen werden. Die Länge und die Wärmleitfähigkeit des Schutzrohres müssen lediglich ein einziges Mal erfaßt werden. Sofern diese Meßgrößen bereits bekannt sind, müssen die Meßsignale lediglich erfaßt werden. Ansonsten ist eine gesonderte Messung zur Bestimmung der Länge und der Leitfähigkeit des Schutzrohres erforderlich. Sofern zur Bestimmung des Massenstromes der Volumenstrom gemessen wird, kann aus dieser Messung die mittlere Geschwindigkeit des Gases übernommen werden. Der lokale Wärmeübergangskoeffizient zwischen Gas- und Schutzrohr kann auf beliebige Weise, z. B. mit Hilfe einer numerischen Strömungssimulation, bestimmt werden. Vorzugsweise wird der lokale Wärmeübergangskoeffizient für jede Zelle vorab bestimmt und gespeichert, und zwar in Form der dimensionslosen Kennzahlen, Reynoldszahl, Nußeltzahl, Prandtlzahl und Strouhalzahl.

Vorteilhafterweise wird ein zylindrisches Schutzrohr verwendet und außerdem der Durchmesser des Schutzrohres erfaßt.

Eine Weiterbildung der Erfindung ist dadurch gekennzeichnet, daß den Verfahrensschritten a) bis e) mehrere Meßzyklen vorgeschaltet werden, bei denen die Schritte a) bis d) mit Referenzgas unterschiedlicher bekannter mittlerer Gastemperatur durchgeführt werden; daß aus dem Verhältnis der bei den Referenzmeßzyklen erfaßten Meßsignale eine der Zahl der Meßzyklen entsprechende Zahl von Referenzsignalmustern in Zuordnung zu den bekannten mittleren Gastemperaturen gespeichert wird; und daß das Signalmuster aus einem späteren Meßzyklus an Gas unbekannter mittlerer Gastemperatur mit den Referenzsignalmustern zur Zuordnung einer bestimmten mittleren Gastemperatur verglichen wird. Je höher die Anzahl der Referenzmeßzyklen an Referenzgas unterschiedlicher bekannter mittlerer Gastemperatur ist, desto genauer kann die Gastemperatur von Meßgas in den späteren Meßzyklen bestimmt werden. Die Temperaturen des Referenzgases sollten möglichst den gesamten Temperaturbereich abdecken, in dem die Temperatur des späteren Meßgases bei dem jeweiligen Anwendungsfall theoretisch liegen kann.

Ein bevorzugtes Ausführungsbeispiel ist dadurch gekennzeichnet, daß

i) ein Wert als vorläufiger Wert für die mittlere Gastemperatur ausgewählt wird,

ii) aus diesem vorläufigen Wert und der Wandtemperatur das turbulente Temperaturprofil im Gas abgeleitet wird,

iii) ausgehend von dem turbulenten Temperaturprofil und den erfaßten Meßsignalen für jede Zelle eine Wärmebilanz aufgestellt wird, in der der Wärmestrom zwischen der Zelle und der Umgebung und zwischen benachbarten Zellen berücksichtigt wird und aus den Wärmebilanzen die dem vorläufigen Wert der mittleren Gastemperatur entsprechende Temperatur am Boden des Schutzrohres berechnet wird,

iv) die gemessene Temperatur am Boden des Schutzrohres mit der berechneten Temperatur am Boden des Schutzrohres verglichen wird,

v) wenn die Abweichung zwischen gemessener und berechneter Temperatur am Boden des Schutzrohres größer als ein vorgegebener Grenzwert ist, ein neuer vorläufiger Wert für die mittlere Gastemperatur ausgewählt wird und die Schritte ii) bis iv) wiederholt werden, und

vi) wenn die Abweichung zwischen gemessener und berechneter Temperatur am Boden des Schutzrohres kleiner oder gleich dem vorgegebenen Grenzwert ist, der letzte vorläufige Wert für die mittlere Gastemperatur als Wert für die mittlere Gastemperatur ausgewählt wird.

Beim Aufstellen der Wärmebilanzen könne sämtliche Wärmeströme, einschließlich Strahlung, berücksichtigt werden. Das Verfahren kann jedoch dadurch vereinfacht werden, daß als Wärmestrom zwischen der Zelle und der Umgebung lediglich der konvektive Wärmestrom angesetzt wird. Alternativ oder zusätzlich kann das Verfahren dadurch vereinfacht werden, daß der Wärmestrom zwischen zwei benachbarten Zellen unter der Annahme einer eindimensionalen stationären Wärmeleitung im Schutzrohr berechnet wird, wobei bei der obersten Zelle die Wandtemperatur als Randbedingung berücksichtigt wird.

Ferner ist es vorteilhaft, daß bei der Messung der Temperatur am Boden des Schutzrohres ein stationärer Zustand vorausgesetzt wird.

Vorzugsweise wird bei der Ableitung der über den Querschnitt der Gasleitung ermittelten Gastemperatur eine inkompressible Strömung vorausgesetzt.

Eine Weiterbildung der Erfindung ist dadurch gekennzeichnet, daß die lokalen Wärmeübergangskoeffizienten aus der mittleren Geschwindigkeit des Gases und dem Gasdruck und/oder dem Massestrom des Gases und/oder der Gasdichte und/oder der geschätzten mittleren Gastemperatur und/oder der Viskosität des Gases abgeleitet werden.

Im folgenden wird die Erfindung anhand eines in der Zeichnung dargestellten bevorzugten Ausführungsbeispiels näher erläutert. In der Zeichnung zeigen:

Fig. 1     eine schematische Darstellung einer bekannten Anordnung zur Messung der mittleren Gastemperatur;
Fig. 2     ein erfindungsgemäßes Flußdiagramm zur Bestimmung der mittleren Gastemperatur;
Fig. 3     eine schematische Darstellung der Wärmebilanz der einzelnen Zellen des Schutzrohres; und
Fig. 4     eine schematische Darstellung eines in vier Zellen unterteilten Schutzrohres.

Fig. 2 zeigt ein Flußdiagramm zur Bestimmung der über den Querschnitt der Gasleitung gemittelten Gastemperatur gemäß einem Ausführungsbeispiel der Erfindung. Das Verfahren beginnt im Schritt 11. Im Schritt 12 werden als Meßsignale die Wandtemperatur der Gasleitung $T_W$, die Wärmeleitfähigkeit des Schutzrohres $\lambda$, die mittlere Geschwindigkeit des Gases $\bar{u}_m$, die Anzahl der Zellen n, die lokalen Wärmeübergangskoeffizienten der einzelnen Zellen $\alpha_i$, der lokale Wärmeübergangskoeffizient am Boden des Schutzrohres $\alpha_B$ sowie die Länge L und der Durchmesser d des Schutzrohres eingegeben.

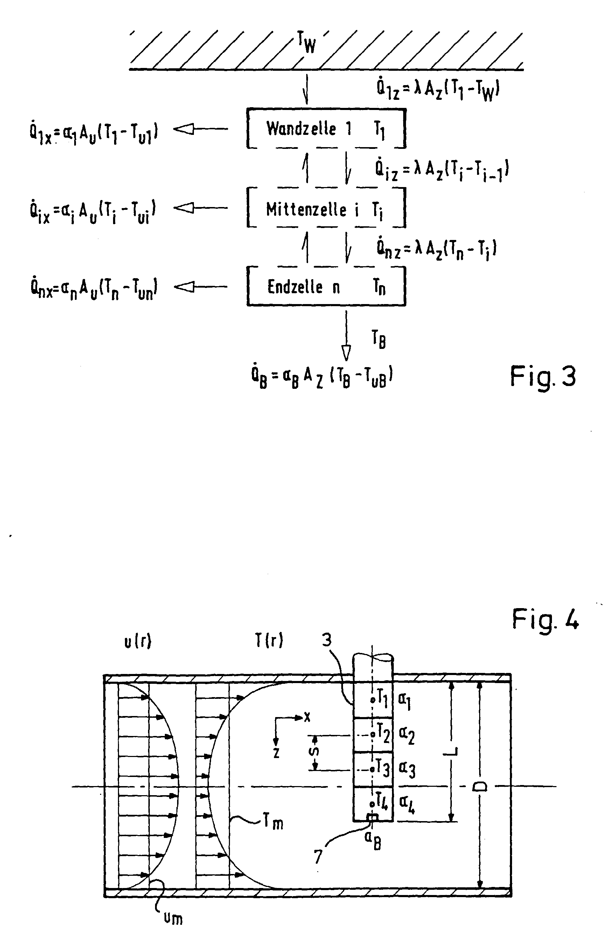

Im Schritt 13 wird dann ein vorläufiger Wert für die mittlere Gastemperatur $T_m$ ausgewählt. Im Schritt 14 wird ausgehend von den erfaßten Meßsignalen und dem vorläufigen Wert für die mittlere Gastemperatur die Temperaturverteilung im Schutzrohr und somit die dem vorläufigen Wert der mittleren Gastemperatur entsprechende Temperatur am Boden des Schutzrohres $T_{Boden}^{CALC}$ berechnet. Hierzu wird zunächst aus dem vorläufigen Wert für die mittlere Gastemperatur $T_m$ und der Wandtemperatur $T_W$ das turbulente Temperaturprofil im Gas abgeleitet. Ausgehend von dem turbulenten Temperaturprofil und den erfaßten Meßsignalen wird dann für jede Zelle, wie anhand der Fig. 3 im folgenden näher erläutert wird, eine Wärmebilanz aufgestellt, und aus diesen Wärmebilanzen wird die dem vorläufigen Wert der mittleren Gastemperatur entsprechende Temperatur $T_{Boden}^{CALC}$ berechnet.

Dieser Wert wird auf eine vorgegebene Anzahl von Stellen hinter dem Komma gerundet und im Schritt 15 mit der gemessenen Temperatur am Boden des Schutzrohres $T_{Boden}^{Meß}$ verglichen. Stimmt die gemessene Temperatur am Boden $T_{Boden}^{Meß}$ mit der berechneten Temperatur am Boden des Schutzrohres $T_{Boden}^{CALC}$ überein, endet das Verfahren mit dem Schritt 16. Der vorläufige Wert für die mittlere Gastemperatur $T_m$ liefert dann die gesuchte mittlere Gastemperatur mit der gewünschten hohen Genauigkeit.

Sofern die gemessene Temperatur am Boden des Schutzrohres $T_{Boden}^{Meß}$ nicht mit der berechneten Temperatur am Boden des Schutzrohres $T_{Boden}^{CALC}$ übereinstimmt, wird ein neuer vorläufiger Wert für die mittlere Gastemperatur $T_m$ ausgewählt (Schritt 17). Die Schritte 14, 15 und 17 werden dann solange wiederholt, bis im Schritt 15 eine Übereinstimmung zwischen gemessener Temperatur am Boden des Schutzrohres $T_{Boden}{}^{Meß}$ und berechneter Temperatur am Boden des Schutzrohres $T_{Boden}{}^{CALC}$ festgestellt wird. Das Verfahren endet dann wiederum mit dem Schritt 16.

Die Vorgehensweise bei der Berechnung der Temperatur am Boden des Schutzrohres $T_{Boden}{}^{CALC}$ im Schritt 14 ist in den Figuren 3 und 4 genauer dargestellt. Fig. 3 zeigt die Wärmebilanz der einzelnen Zellen des Schutzrohres 3. In der Zeichnung sind lediglich die oberste Zelle, nämlich die Wandzelle 1, eine mittlere Zelle, die Mittenzelle i, sowie die unterste Zelle, die Endzelle n, dargestellt. Links von den Zellen ist der Wärmestrom $\dot{Q}_{ix}$ des konvektiven Wärme-übergangs zwischen der jeweiligen Zelle und der Umgebung vor der jeweiligen Zelle mit der Temperatur $T_{ui}$ dargestellt. Der Wärmestrom in axialer Richtung des Schutzrohres $\dot{Q}_{iz}$ wird bei diesem Ausführungsbeispiel aufgrund eindimensionaler Wärmeleitung berechnet. In diesen Wärmestrom geht bei der Wandzelle 1 die Wandtemperatur $T_w$ der Gasleitung ein. Ferner hängen die Wärmeströme von der Querschnittsfläche $A_z$ der Zelle bzw. des Schutzrohres und der Zellmantelfläche $A_u$ ab. Diese beiden Größen können aus dem Durchmesser des Schutzrohres, der Länge des Schutzrohres sowie der Anzahl n der Zellen berechnet werden. Die Temperaturen $T_{ui}$ sind die Umgebungstemperaturen vor der jeweiligen Zellen bei Annahme einer ungestörten Anströmung. Die Verhältnisse am Boden des Schutzrohres sind mit dem Index "B" gekennzeichnet.

In Fig. 4 ist das Schutzrohr beispielhaft in vier Zellen aufgeteilt. Die Wärmebilanz für diese vier Zellen ergibt das folgende tridiagonale Gleichungssystem:

$$\begin{pmatrix} 3\hat{\alpha}_0 + \hat{\alpha}_1 & \hat{\alpha}_0 & 0 & 0 \\ \hat{\alpha}_0 & 2\hat{\alpha}_0 + \hat{\alpha}_2 & \hat{\alpha}_0 & 0 \\ 0 & \hat{\alpha}_0 & 2\hat{\alpha}_0 + \hat{\alpha}_3 & \hat{\alpha}_0 \\ 0 & 0 & \hat{\alpha}_0 & \hat{\alpha}_0 + \hat{\alpha}_4 + \hat{\alpha}_B \end{pmatrix} \cdot \begin{pmatrix} T_1 \\ T_2 \\ T_3 \\ T_4 \end{pmatrix} = \begin{pmatrix} 2\hat{\alpha}_0 T_W + \hat{\alpha}_1 T_{u1} \\ \hat{\alpha}_2 T_{u2} \\ \hat{\alpha}_3 T_{u3} \\ 2\hat{\alpha}_4 T_{u4} + \hat{\alpha}_B T_{uB} \end{pmatrix} \quad (1)$$

mit:

$$\hat{\alpha}_0 = A_z \cdot s \cdot \lambda \qquad (2)$$

$$\hat{\alpha}_i = A_u \cdot \alpha_i \qquad (3)$$

$$\hat{\alpha}_B = A_z \cdot \alpha_B \qquad (4)$$

Hierbei gibt s den Abstand zwischen den Zellenmitten an, der in Fig. 4 veranschaulicht ist. Das Gleichungssystem (1) besteht aus der Multiplikation einer 4X4-Matrix **A** mit einem Vektor:

$$\mathbf{A} \cdot \vec{T} = \vec{B}$$

Zur Berechnung der Zellenmittentemperaturen muß der Vektor $\vec{B}$ lediglich mit der inversen Matrix $\mathbf{A}^{-1}$ multipliziert werden:

$$\vec{T} = \mathbf{A}^{-1} \cdot \vec{B}$$

Aus dem Vektor $\vec{T}$ der Zellenmittentemperaturen läßt sich die Temperatur am Boden des Schutzrohres $T_{Boden}{}^{CALC}$ berechnen, die im Schritt 15 der Fig. 2 mit der gemessenen Temperatur am Boden des Schutzrohres verglichen wird.

Bei dieser Berechnung der Temperatur am Boden des Schutzrohres wurde zur Vereinfachung von einem voll ausgebildeten, turbulenten Temperaturprofil unmittelbar vor den einzelnen Zellen ausgegangen. Ferner wurde der Wärmestrom zwischen zwei benachbarten Zellen unter der Annahme einer eindimensionalen stationären Wärmeleitung im Schutzrohr berechnet, und es wurde eine Temperaturmessung im stationären Zustand vorausgesetzt. Auftretende Wärmestrahlung wurde vernachlässigt. Schließlich wurde eine inkompressible Strömung (d. h. eine Strömung einer Machzahl < 0,3) vorausgesetzt.

Trotz dieser Vereinfachungen kann die über den Querschnitt der Gasleitung gemittelte Gastemperatur mit bisher unerreichter Genauigkeit von 0,3 K bestimmt werden.

Statt der Wärmeübergangskoeffizienten $\alpha_i$ können die dimensionslosen Kennzahlen Reynoldszahl, Nußeltzahl, Prandtlzahl und Strouhalzahl verwendet werden, die sich rechnerisch problemlos bestimmen lassen. Der Vorteil der Verwendung dieser vier Kennzahlen statt der lokalen Wärmeübergangskoeffizienten $\alpha_i$ für jede Zelle besteht darin, daß für jede Zelle eine einzige Kennzahlkombination einen breiten Bereich von Strömungsbedingungen abdeckt.

Im Rahmen der Erfindung sind zahlreiche Abwandlungsmöglichkeiten gegeben. Insbesondere kann das beispielhaft in Fig. 2 dargestellte Flußdiagramm zur Bestimmung der über den Querschnitt der Gasleitung gemittelten Gastemperatur aus den erfaßten Meßsignalen beliebig variiert werden. Unter diesem Gesichtspunkt ist Gegenstand der Erfindung auch die Anwendung der erfindungsgemäßen Maßnahmen zur Bestimmung der Schutzrohrlänge oder -eintauchtiefe (radiale Position des Temperatursensors) bei bekannter mittlerer Gastemperatur. Auch die Anzahl der Zellen, in welche das Schutzrohr unterteilt wird, kann für jeden Anwendungsfall individuell gewählt werden. Die Bestimmung der gemittelten Gastemperatur ist umso genauer, je größer die Anzahl der Zellen ist.

**Patentansprüche**

1.  Verfahren zur Bestimmung der über den Querschnitt einer Gasleitung gemittelten Gastemperatur, wobei

    a) die Temperatur am Boden eines in die Gasleitung hineinragenden Schutzrohres und die Wandtemperatur der Gasleitung gemessen werden,
    b) die Länge und die Wärmeleitfähigkeit des Schutzrohres erfaßt werden,
    c) die mittlere Geschwindigkeit des Gases erfaßt wird,
    d) das Schutzrohr in axialer Richtung in wenigstens drei Zellen unterteilt wird, wobei der lokale Wärmeübergangskoeffizient zwischen Gas und Schutzrohr oder die dimensionslosen Kennzahlen Reynoldszahl, Nußeltzahl, Prandtlzahl und Strouhalzahl für jede Zelle erfaßt wird bzw. werden, und
    e) aus den erfaßten Meßsignalen die über den Querschnitt der Gasleitung gemittelte Gastemperatur abgeleitet wird.

2.  Verfahren nach Anspruch 1, dadurch gekennzeichnet, daß ein zylindrisches Schutzrohr verwendet wird und außerdem der Durchmesser des Schutzrohres erfaßt wird.

3.  Verfahren nach Anspruch 1 oder 2, dadurch gekennzeichnet, daß den Verfahrensschritten a) bis e) mehrere Meßzyklen vorgeschaltet werden, bei denen die Schritte a) bis d) mit Referenzgas unterschiedlicher bekannter mittlerer Gastemperatur durchgeführt werden; daß aus dem Verhältnis der bei den Referenzmeßzyklen erfaßten Meßsignale eine der Zahl der Meßzyklen entsprechende Zahl von Referenzsignalmustern in Zuordnung zu den bekannten mittleren Gastemperaturen gespeichert wird; und daß das Signalmuster aus einem späteren Meßzyklus an Gas unbekannter mittlerer Gastemperatur mit den Referenzsignalmustern zur Zuordnung einer bestimmten mittleren Gastemperatur verglichen wird.

4.  Verfahren nach Anspruch 1 oder 2, dadurch gekennzeichnet, daß

    i) ein Wert als vorläufiger Wert für die mittlere Gastemperatur ausgewählt wird,
    ii) aus diesem vorläufigen Wert und der Wandtemperatur das turbulente Temperaturprofil im Gas abgeleitet wird,
    iii) ausgehend von dem turbulenten Temperaturprofil und den erfaßten Meßsignalen für jede Zelle eine Wärmebilanz aufgestellt wird, in der der Wärmestrom zwischen der Zelle und der Umgebung und zwischen benachbarten Zellen berücksichtigt wird, und aus den Wärmebilanzen die dem vorläufigen Wert der mittleren Gastemperatur entsprechende Temperatur am Boden des Schutzrohres berechnet wird,
    iv) die gemessene Temperatur am Boden des Schutzrohres mit der berechneten Temperatur am Boden des Schutzrohres verglichen wird,
    v) wenn die Abweichung zwischen gemessener und berechneter Temperatur am Boden des Schutzrohres größer als ein vorgegebener Grenzwert ist, ein neuer vorläufiger Wert für die mittlere Gastemperatur ausgewählt wird und die Schritte ii) bis iv) wiederholt werden, und
    vi) wenn die Abweichung zwischen gemessener und berechneter Temperatur am Boden des Schutzrohres kleiner oder gleich dem vorgegebenen Grenzwert ist, der letzte vorläufige Wert für die mittlere Gastemperatur als Wert für die mittlere Gastemperatur ausgewählt wird.

5. Verfahren nach Anspruch 4, dadurch gekennzeichnet, daß als Wärmestrom zwischen der Zelle und der Umgebung lediglich der konvektive Wärmestrom angesetzt wird.

6. Verfahren nach Anspruch 4 oder 5, dadurch gekennzeichnet, daß der Wärmestrom zwischen zwei benachbarten Zellen unter der Annahme einer eindimensionalen stationären Wärmeleitung im Schutzrohr berechnet wird, wobei bei der obersten Zelle die Wandtemperatur als Randbedingung berücksichtigt wird.

7. Verfahren nach einem der Ansprüche 1 bis 6, dadurch gekennzeichnet, daß bei der Messung der Temperatur am Boden des Schutzrohres ein stationärer Zustand vorausgesetzt wird.

8. Verfahren nach einem der Ansprüche 1 bis 7, dadurch gekennzeichnet, daß bei der Ableitung der über den Querschnitt der Gasleitung gemittelten Gastemperatur eine inkompressible Strömung vorausgesetzt wird.

9. Verfahren nach einem der Ansprüche 1 bis 8, dadurch gekennzeichnet, daß die lokalen Wärmeübergangskoeffizienten aus der mittleren Geschwindigkeit des Gases und dem Gasdruck und/oder dem Massenstrom des Gases und/oder der Gasdichte und/oder der geschätzten mittleren Gastemperatur und/oder der Viskosität des Gases abgeleitet werden.

Geschwindigkeitsprofil u(r)

Temperaturprofil T(r)

Fig. 1

$T_m$

Fig. 2

Start — 11

$T_w, \lambda, \bar{u}_m, n, \alpha_i, \alpha_B, L, d$
vorgeben — 12

$T_m$ annehmen — 13

Temperaturverteilung — 14
berechnen
$T_{Boden}^{CALC}$

$T_m$ modifizieren — 17

$T_{Boden}^{Meß} = T_{Boden}^{CALC}$ ? — 15

nein

ja

Ende $T_m$ — 16

$$\dot{Q}_{1z} = \lambda\, A_z (T_1 - T_W)$$

$$\dot{Q}_{1x} = \alpha_1 A_u (T_1 - T_{u1}) \Longleftarrow \boxed{\text{Wandzelle 1} \quad T_1}$$

$$\dot{Q}_{iz} = \lambda\, A_z (T_i - T_{i-1})$$

$$\dot{Q}_{ix} = \alpha_i A_u (T_i - T_{ui}) \Longleftarrow \boxed{\text{Mittenzelle } i \quad T_i}$$

$$\dot{Q}_{nz} = \lambda\, A_z (T_n - T_i)$$

$$\dot{Q}_{nx} = \alpha_n A_u (T_n - T_{un}) \Longleftarrow \boxed{\text{Endzelle } n \quad T_n}$$

$$T_B$$

$$\dot{Q}_B = \alpha_B A_Z (T_B - T_{uB})$$

Fig. 3

Fig. 4

$u(r)$    $T(r)$   3

$T_1$   $\alpha_1$

$T_2$   $\alpha_2$

$T_3$   $\alpha_3$

$T_4$   $\alpha_4$

$T_m$

$\alpha_B$

7

$u_m$

Europäisches
Patentamt

Nummer der Anmeldung

EP 99 12 3816

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | AUGUSTIN S ET AL: "NUMERICAL CALCULATION OF STATIC AND DYNAMIC PARAMETERS OF INDUSTRIAL TEMPERATURE SENSORS" MEASUREMENT,GB,INSTITUTE OF MEASUREMENT AND CONTROL. LONDON, Bd. 17, Nr. 4, 1. April 1996 (1996-04-01), Seiten 217-228, XP000629323 ISSN: 0263-2241 * Seite 219, Absatz 3 - Seite 226, Absatz 6.3 * | 1 | G01K7/42 G01K3/06 |
| A | PATENT ABSTRACTS OF JAPAN vol. 006, no. 148 (P-133), 7. August 1982 (1982-08-07) & JP 57 067830 A (KOBE STEEL LTD), 24. April 1982 (1982-04-24) * Zusammenfassung * | 1,3 | |
| A | YUSASHI MIKE NOZAWA: "NON-INTRUSIVE FLUID TEMPERATURE MEASUREMENT IN PIPING SYSTEM USING AN INTEGRATED INTELLIGENT INSTRUMENTATION" PROCEEDINGS OF THE INSTRUMENTATION AND MEASUREMENT TECHNOLOGY CONFERENCE. (IMTC),US,NEW YORK, IEEE,1995, Seiten 758-761, XP000534952 ISBN: 0-7803-2616-4 | 1 | RECHERCHIERTE SACHGEBIETE (Int.Cl.7) G01K G01N |
| A | US 3 776 039 A (BOWEN M) 4. Dezember 1973 (1973-12-04) * das ganze Dokument * | 1 | |
| A | US 5 816 706 A (HEIKKILAE ILKKA ET AL) 6. Oktober 1998 (1998-10-06) * Zusammenfassung * | 1 | |
| A | US 5 647 668 A (SCHNEIDER ERICH ET AL) 15. Juli 1997 (1997-07-15) * Zusammenfassung * | 1 | |

Der vorliegende Recherchenbericht wurde für alle Patentansprüche erstellt

| Recherchenort | Abschlußdatum der Recherche | Prüfer |
|---|---|---|
| DEN HAAG | 2. März 2000 | Ramboer, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**   EP 99 12 3816

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2000

| Im Recherchenbericht angeführtes Patentdokument | Datum der Veröffentlichung | Mitglied(er) der Patentfamilie | Datum der Veröffentlichung |
|---|---|---|---|
| JP 57067830 A | 24-04-1982 | JP 1447757 C<br>JP 62056450 B | 30-06-1988<br>26-11-1987 |
| US 3776039 A | 04-12-1973 | KEINE | |
| US 5816706 A | 06-10-1998 | FI 941383 A<br>DE 19581588 T<br>WO 9525946 A<br>GB 2302176 A,B | 25-09-1995<br>27-03-1997<br>28-09-1995<br>08-01-1997 |
| US 5647668 A | 15-07-1997 | DE 4433631 A<br>IT MI951890 A<br>JP 8114513 A | 28-03-1996<br>21-03-1996<br>07-05-1996 |

EPO FORM P0461

Für nähere Einzelheiten zu diesem Anhang : siehe Amtsblatt des Europäischen Patentamts, Nr.12/82